# EUROPÄISCHE PATENTSCHRIFT

(11) **EP 2 772 674 B1**
(45) Veröffentlichungstag und Bekanntmachung des Hinweises auf die Patenterteilung: **10.10.2018**
(21) Anmeldenummer: 14157194.3
(22) Anmeldetag: 28.02.2014
(51) Int. Cl.: F16L 29/04, F16L 37/34

(54) **Medienleitungsendstück**
Fluid line end piece
Embout de conduit de fluide

(30) Priorität: 01.03.2013 DE 202013100900 U
(43) Veröffentlichungstag der Anmeldung: 03.09.2014
(73) Patentinhaber: DILO Armaturen und Anlagen GmbH, 87727 Babenhausen (DE)
(72) Erfinder: Sieber, Peter, 89281 Altenstadt (DE); Kohler, Robert, 89297 Messhofen (DE); Knoll, Werner, 89293 Kellmünz (DE)
(74) Vertreter: Pfister, Stefan Helmut Ulrich

(56) Entgegenhaltungen:
- WO-A1-00/01976
- DE-A1-102011 122 823
- US-A- 2 821 412
- US-A- 2 828 978
- US-A- 3 654 965

## Beschreibung

Die Erfindung betrifft ein Medienleitungsendstück gemäß dem Oberbegriff des Anspruchs 11 und eine Kombination aus zwei miteinander zu verbindenden Medienleitungsendstücken gemäß dem Oberbegriff des Anspruchs 1.

Ein solches Medienleitungsendstück und eine solche Kombination sind aus der US 2 828 978 A bekannt. Derartige Medienleitungsendstücke, auch als Kopplungs- oder Kupplungselemente bezeichnet, dienen zum Verbinden von Medienleitungen. Insbesondere Medienleitungen, die kritische Medien, wie beispielsweise Gase und hierbei insbesondere unter Umweltschutzgesichtspunkten kritische Gase, wie beispielsweise das Treibhausgas SF6 leiten, werden in der Regel über Steck- oder Bajonettverschlüsse miteinander verbunden. Bis zur eigentlichen Verbindung sind die jeweiligen Medienleitungsendstücke durch eine im Inneren angeordnete ventilartige Abdichtung derart abgeschlossen, dass die in der Leitung geführten beziehungsweise die Leitung durchströmenden Gase nicht aus den Medienleitungsendstücken austreten können. Als kritisch erweist sich in diesem Zusammenhang, dass ein Mechanismus vorgesehen werden muss, der die Betätigung des Ventils übernimmt und die Medienleitung nach dem Kopplungsvorgang, das heißt, in gekoppeltem Zustand, freigibt. Ferner weisen bekannte Dichtvorrichtungen nur unzureichende Dichtmittel, bspw. in Nuten in der Dichtvorrichtung eingesetzte oder eingeklebte Dichtringe, auf. Es ist es von besonderem Interesse, dass eine möglichst leckagefreie Verbindung der beiden Medienleitungsendstücke durchgeführt wird, um auch im Augenblick der Verbindung der beiden Medienleitungsendstücke den Austritt des Mediums wirksam zu unterbinden beziehungsweise auf das geringstmögliche Maß zu reduzieren. Bekannte Medienleitungsendstücke weisen hierbei ineinandergreifende Innenelemente auf, die gegenüber dem Medienleitungsendstück vorstehen und bereits bei einem ersten Kontaktieren der beiden zu verbindenden Medienleitungsendstücke eine Ventilbetätigung vornehmen. Bis zum vollständig dichten Verbinden der beiden Medienleitungsendstücke kann es dabei zu einem unerwünschten Öffnen der Ventile und dem Austritt von Medium kommen.
Es ist Aufgabe der vorliegenden Erfindung, ein Medienleitungsendstück zur Verfügung zu stellen, das eine möglichst leckagefreie Verbindung mit einem zweiten Medienleitungsendstück ermöglicht.

Die Aufgabe wird gelöst durch ein Medienleitungsendstück gemäß Anspruch 11 und durch eine Kombination aus zwei miteinander zu verbindenden Medienleitungsendstücken gemäß Anspruch 1.

Durch das Anformen, Aufspritzen oder Aufvulkanisieren, mithin das kraft- oder stoffschlüssige Verbinden von Dichtkörper und Dichtelement wird eine stabile Dichtleistung und eine gleichzeitig kostengünstige Herstellung erreicht. Die erfindungsgemäße Verbindung erweist sich als besonders dauerhaft und aufgrund des größeren, d.h. längeren Dichtbereichs als besonders zuverlässig abdichtend. In der Formgebung kann zudem die Ausgestaltung des Dichtbereiches besonders berücksichtigt und ein verbesserter Dichtsitz erreicht werden.
Der Dichtkörper ist bevorzugt im Medienleitungsendstück beweglich, insbesondere axial beweglich gelagert. Eine Relativbewegung des Dichtkörpers im Medienleitungsendstück bewirkt dabei eine Freigabe beziehungsweise einen Verschluss des Mediendurchganges, je nach dem, ob eine Kopplung oder Entkopplung der Medienleitungsendstücke vorgesehen ist beziehungsweise erfolgt. Das Dichtelement ist im Medienleitungsendstück bevorzugt als ein beweglicher Dichtkegel vorgesehen. Dieser Dichtkegel wirkt bei Kopplung derart mit einer im anzukoppelnden zweiten oder weiteren Medienleitungsendstück zusammen, dass eine Freigabe des Durchflusses beziehungsweise des Mediendurchganges erfolgen kann. Aufgrund des angeformten Dichtkörpers bleibt zur letztendlichen Verbindung der beiden Medienleitungsendstücke der Mediendurchgang abgedichtet und der Austritt des Mediums wird wirkungsvoll unterbunden. Der Dichtkegel beziehungsweise ein diesem gegenüberstehendes Dichtelement im weiteren Medienleitungsendstück wird bevorzugt durch eine Rückstellfeder beaufschlagt und in die Dichtposition eingedrückt.

Um eine sichere Führung des Dichtelementes zu realisieren, weist dieses bevorzugt ein in das Medienleitungsendstück beziehungsweise die dort vorgesehene Rückstellfeder einstehendes Kreuzstück auf. Dieses ist in der dem Dichtkegel zugeordneten Dichtelementfeder oder Rückstellfeder federgelagert. Die Kraftrichtung der Dichtelementfeder beziehungsweise Rückstellfeder wirkt in Richtung der Endseite des durch den Dichtkegel abgeschlossenen Medienleitungsendstückes, das heißt, in Richtung des Endes des Medienleitungsendstückes, das mit einem zweiten, gegenüberliegenden Medienleitungsendstück verbunden wird und dort an dessen Ende anliegt beziehungsweise in dieses Ende einsteht. Als Dichtelement in dem zweiten, mit dem ersten, zuvor beschriebenen Medienleitungsendstück zu verbindenden Medienleitungsendstück ist ein insbesondere im Medienleitungsendstück feststehender Stößel vorgesehen. Wird nun das erste, zuvor beschriebene, den verschiebbaren Dichtkegel oder ein vergleichbares Dichtelement aufweisendes Medienleitungsendstück mit dem zweiten, den insbesondere feststehenden Stößel aufweisenden Medienleitungsendstück verbunden, so bewirkt der Stößel eine axiale Bewegung des Dichtkegels, wobei dieser in das Medienleitungsendstück eingedrückt wird und dabei im Zuge der Verbindung der beiden Medienleitungsendstücke den Mediendurchgang freigibt.

Das Dichtelement beziehungsweise der Stößel ist bevorzugt im Medienleitungsendstück feststehend angeordnet und weist eine, dem Stößel zugeordnete beziehungsweise den Stößel umgebende Hülse auf, die auf einer Hülsenfeder federgelagert beweglich in dem Medienleitungsendstück angeordnet ist. Eine Relativbewegung der Hülse bringt diese aus einer Dichtposition im zweiten Medienleitungsendstück und bewirkt eine Freigabe des Mediendurchganges. Dabei wirkt die federgelagerte Hülse mit einer entsprechenden Ausnehmung im anzubindenden gegenüberliegenden Medienleitungsendstück zusammen und wird durch dieses in die Öffnungsposition eingedrückt. Während des gesamten Verbindungsvorganges, bis zu dessen Abschluss, bleibt somit der im zweiten Medienleitungsendstück vorgesehene Medienfluss von der Atmosphäre getrennt und es kommt erst dann zu einem Mediendurchgang, wenn eine Verbindung der beiden Medienleitungsendstücke abgeschlossen ist. Die Abdichtung wird hierbei zum einen über die federgelagerte Hülse und den Stößel sichergestellt, im gegenüberliegenden, zweiten, anzubindenden Medienleitungsendstück wird die Abdichtung durch den federgelagerten Dichtkegel erreicht.

Die Hülse, die federgelagert im ersten Medienleitungsendstück angeordnet ist, dichtet zunächst erst das den Stößel aufweisende Medienleitungsendstück zusammen mit dem Stößel ab, bei Kontaktierung des zweiten, anzubindenden Medienleitungsendstückes ermöglich die Hülse zusammen mit dem Stößel eine vorübergehende Abdichtung. Durch weiteres aufeinander zu bewegen der beiden Medienleitungsendstücke wird die Hülse in das Medienleitungsendstück eingedrückt, während der Stößel den Dichtkegel im anderen gegenüberliegenden Medienleitungsendstück bewegt. Während der gesamten Bewegung bleibt der Mediendurchgang abgedichtet und es kann zum einen aufgrund der beweglichen Hülse und des Stößels, zum anderen aufgrund des Dichtelementes beziehungsweise Dichtkegels kein Medium austreten, bis eine vollständige Verbindung der beiden Medienleitungsendstücke erfolgt ist und der Mediendurchgang abgedichtet freigegeben werden kann.

Der Mediendurchgang wird in dem Medienleitungsendstück, das den Dichtkegel aufweist, von einer zylindrischen und im Endbereich sich konisch verjüngenden Innenwand zumindestens teilweise seitlich begrenzt. Diese Geometrie des Mediendurchganges erweist sich unter strömungstechnischen Gesichtspunkten als besonders vorteilhaft und verbessert zudem die Dichtleistung des Dichtelementes beziehungsweise Dichtkegels, der bevorzugt im konischen Teil der Innenwand seinen Dichtsitz findet.

Der Mediendurchgang ist zumindest teilweise von der Innenfläche im anzubindenden Medienleitungsendstück seitlich begrenzt beziehungsweise gegenüber der Atmosphäre im entkoppelten Zustand des Medienleitungsendstückes abgetrennt.

Das Dichtelement weist günstiger Weise endseitig einen Flansch auf, wobei der Dichtkörper in oder an dem sich bildenden Absatz des Flansches angeordnet ist.

Eine weitere als vorteilhaft angesehene Ausführungsform des erfindungsgemäßen Medienleitungsendstückes sieht vor, dass der Dichtkörper ringartig ausgebildet ist. Eine Ringinnenseite des Dichtkörpers liegt dabei bevorzugt an dem Dichtelement an, wodurch eine besonders dauerhafte und ortsfeste Anbindung des Dichtkörpers am Dichtelement beziehungsweise Dichtkegel erreicht wird.

Eine bevorzugte Weiterbildung der Erfindung sieht vor, dass der Dichtkörper auf der dem Stößel beziehungsweise dem Dichtkegel zugewandten Seite im Querschnitt gesehen L-förmig ausgebildet ist. Ein Schenkel, bevorzugt der kürzere Schenkel des L ist dabei in Richtung des Endes des jeweiligen Medienleitungsendstückes ausgerichtet und stützt sich auf dem Stößel beziehungsweise dem Dichtkegel oder einer dort vorgesehenen flanschartigen Struktur ab. Durch das anströmende beziehungsweise im Medienleitungsendstück anstehende Medium, das gegebenenfalls unter Druck steht, wird der Dichtkörper somit auf den Stößel beziehungsweise den Dichtkegel aufgepresst, wodurch die Dichtwirkung weiter wesentlich verbessert werden kann. Auch verhindert der L-förmige Querschnitt ein Abrutschen des Dichtkörpers und verbessert somit dessen Positionier- und Haltbarkeit am Dichtelement.

Als vorteilhaft wird angesehen, wenn der Dichtkörper auf der der Innenwand des Mediendurchganges zugewandten Seite im Querschnitt gesehen keilförmig ausgebildet ist. Auch diese Ausgestaltung beziehungsweise Geometrie des Dichtkörpers verbessert die Strömungseigenschaften im Medienleitungsendstück, sofern dies mit einem weiteren Medienleitungsendstück gekoppelt ist und der Mediendurchgang freigegeben wurde. Die Seiten des Keils weisen dabei bevorzugt ungleiche Längen auf.

Die bevorzugt ungleichen Längen der Keilseiten erweisen sich ebenfalls unter strömungstechnischen Gesichtspunkten als vorteilhaft. Zudem wird ein Anliegen des Dichtkörpers an der Innenwand des Mediendurchganges verbessert, wenn die kurzen Seiten des Keils die Steigung beziehungsweise Neigung der konisch ausgebildeten Innenwand aufnehmen und somit die Kontaktfläche mit dieser Innenwand erhöht wird.

Als günstig erweist es sich, wenn der Dichtkörper aus Fluorkautschuk, EPDM-Kautschuk, PTFE (Teflon), NBR-Kunststoff oder Viton (Fluorelastomer) gebildet ist. Durch geeignete Auswahl des Dichtkörpers kann eine Anpassung des Medienleitungsendstückes beziehungsweise des Dichtkörpers oder Dichtelementes an die unterschiedlichen Medien durchgeführt werden. Die verwendbaren Kunststoffe beziehungsweise Materialien zur Herstellung des Dichtkörpers bleiben nicht auf die vorgenannten beschränkt. Selbstverständlich kann auch in Anpassung an die jeweiligen Medien oder Bedingungen jede, dem Fachmann bekannte und geeignete Art an Material verwendet werden. Die Erfindung ist nicht auf die genannten beschränkt. Die Erfindung umfasst sämtliche für Dichtungen geeignete Spritz-, anform-, aufvulkanisierbaren Kunststoffe.
In einer als vorteilhaft angesehenen Weiterbildung der Erfindung ist vorgesehen, dass ein stirnseitiger Endbereich oder eine Endfläche des Medienleitungsendstückes eine Dichtfläche bildet oder zur Verfügung stellt. Diese Dichtfläche wirkt mit einem Dichtelement im jeweils zu verbindenden Medienleitungsendstück zusammen und dichtet bereits bei in Kontaktieren der beiden Medienleitungsendstücke den Kontaktbereich beziehungsweise den den Kontaktbereich umgebenden Bereich des Medienleitungsendstückes beziehungsweise der Endfläche oder des Endbereiches ab. So kann auch bei nur zunächst lose in Kontakt gebrachten Medienleitungsendstücken ein Austritt von Medien wirksam unterbunden werden, die Leckageneigung wird somit wesentlich reduziert.

Es ist vorgesehen, dass in beziehungsweise an der Dichtfläche beziehungsweise den Dichtflächen wenigstens eine elastische Dichtung angeordnet ist. Bei Verbinden der beiden Medienleitungsendstücke dichtet diese elastische Dichtung den Kontaktbereich ab, so dass alle nachfolgenden Kopplungsschritte bereits im abgedichteten Zustand der Verbindung erfolgen können. Die elastische Dichtung passt sich der jeweils zur Verfügung stehenden Dichtfläche beziehungsweise der dieser gegenüberliegenden Dichtfläche an. Das Dichtelement schließt bündig mit der jeweiligen Dichtfläche des Medienleitungsendstückes ab. Es werden somit vorstehende Dichtabschnitte beziehungsweise Dichtflächen verhindert und es kann ein im Wesentlichen bündiges Aneinanderbeziehungsweise Aufeinandersetzen der beiden Medienleitungsendstücke vor Durchführen der eigentlichen Verbindung erfolgen.

Als vorteilhaft wird angesehen, wenn die Dichtelemente von zu verbindenden Medienleitungsendstücken dichtend zusammenführbar sind. Im stirnseitigen Endbereich des ersten zu verbindenden Medienleitungsendstückes ist eine dem Dichtelement und/oder dem Endbereich des zweiten zu verbindenden Medienleitungsendstückes in Form und/oder Größe im Wesentlichen entsprechende Aufnahme beziehungsweise ein Verbindungsraum für das Dichtelement und/oder den Endbereich vorgesehen. Somit wird bereits bei Beginn der Kopplung der beiden Medienleitungsendstücke eine formschlüssige Verbindung der Endbereiche der beiden Medienleitungsendstücke möglich. Durch Anordnung geeigneter zusätzlicher Dichtungen wird bereits bei erster Kontaktierung der stirnseitigen Endbereiche der Medienleitungsendstücke eine zufriedenstellende Abdichtung erreicht. Sämtliche nachfolgenden Schritte zur Kopplung der beiden Medienleitungsendstücke und zur Freigabe des Mediendurchganges geschehen dann in dem abgedichteten beziehungsweise geschützten Zustand, so dass ein ungewollter Austritt von Medien über die Medienleitungsendstücke im entkoppelten beziehungsweise zur Kopplung aneinandergelegten Zustand der Medienleitungsendstücke wirksam verhindert wird.
Der Aufnahme- beziehungsweise Verbindungsraum wie zuvor definiert, steht im Entkopplungsfall als Ausgleich- beziehungsweise Auffangvolumen für entweichende Medien zur Verfügung. Die entweichenden Medien, die aufgrund der erfindungsgemäßen Medienleitungsendstückkonfiguration nur in sehr geringem Maße austreten können, sammeln sich in diesem Ausgleich beziehungsweise Auffangvolumen und können von dort aufgenommen und abgeführt werden. Der Verbindungs- beziehungsweise Aufnahmeraum ist napfartig ausgebildet. Eine Bodenfläche des Napfes wird dabei durch das Dichtelement gebildet. Der stirnseitige Endbereich des Medienleitungsendstückes definiert die Napftiefe. Es wird damit ein zunächst formschlüssiger Eingriff der stirnseitigen Endbereiche der beiden zu verbindenden Medienleitungsendstücke ermöglicht. Hierdurch wird die Dichtwirkung wesentlich verbessert und das geführte Verbinden der beiden Medienleitungsendstücke ermöglicht. Ein Verrutschen oder Verschieben der Medienleitungsendstücke in radialer Richtung gegeneinander wird aufgrund der napfartigen Ausbildung des Verbindungsraumes wirksam verhindert und der nachfolgende Kopplungsvorgang somit erleichtert und hinsichtlich der axialen Führung der Medienleitungsendstücke verbessert.

Die am stirnseitigen Endbereich des Medienleitungsendstückes beziehungsweise in der dort vorgesehenen Dichtfläche angeordnete Dichtung ist bevorzugt als O-Ring ausgebildet. Zur Aufnahme des O-Ringes wird es als günstig angesehen, wenn in der Dichtfläche eine umlaufende Nut vorgesehen ist, in die der O-Ring ganz oder teilweise eingesenkt werden wird.

Die auf die Dichtelemente beziehungsweise die Hülse wirkende Hülsenfeder weist bevorzugt eine Kraftrichtung auf, die zu der dem stirnseitigen Endbereich gegenüberliegenden Endseite des Medienleitungsendstückes weist. Hierdurch wird gewährleistet, dass die Hülse im entkoppelten Zustand stets in ihrer durch die Stößelendfläche abgedichteten Position sitzt und somit der Medienaustritt wirksam unterbunden wird. Erst durch Koppeln der beiden Medienleitungsendstücke wird die Hülse durch das anzukoppelnde Medienleitungsendstück derart verschoben, dass es zu einer Kompression der Hülsenfeder kommt. Nach oder beim Entkoppeln der beiden Medienleitungsendstücke bewirkt dann die Hülsenfeder durch Entspannunen ein Verschieben der Hülse in Richtung des stirnseitigen Endbereiches, um dort zusammen mit dem Stößel beziehungsweise dessen Endfläche und dem daran angeordneten Dichtelement beziehungsweise Dichtkörper wieder eine Abdichtung des Mediendurchganges durchzuführen. Die Hülsenfeder hält bis zu einer erneuten Ankopplung eines Medienleitungsendstückes die Hülse in dieser Position und gewährleistet somit eine sichere Abdichtung.

Das Medienleitungsendstück ist bevorzugt als Kupplungsstück oder Kupplungsgegenstück, insbesondere für eine Schnellanschlusskupplung ausgebildet. Hierbei kann eine Kombination aus Kupplung der Medienleitungsendstücke und Verriegelung der Schnellanschlusskupplung vorgesehen werden. In einem Kupplungs- beziehungsweise Verbindungs- und nachfolgenden Verriegelungsvorgang wird eine dichte Verbindung zwischen den Medienleitungsendstücken gewährleistet und durch die Dichtkörper ein unbeabsichtigter gegebenenfalls vorzeitiger Austritt des Mediums verhindert.

In der Zeichnung ist die Erfindung insbesondere in einem Ausführungsbeispiel schematisch dargestellt. Es zeigen:
Fig. 1a die Medienleitungsendstücke in Seitenansicht
Fig. 1b eine Schnittdarstellung der in Fig. 1a dargestellten Medienleitungsendstücke
Fig. 2a die Medienleitungsendstücke in gekoppeltem Zustand in Seitenansicht
Fig. 2b die Medienleitungsendstücke in gekoppeltem Zustand in seitlicher Schnittdarstellung

In den Figuren sind gleiche oder einander entsprechende Elemente jeweils mit den gleichen Bezugszeichen bezeichnet und werden daher, sofern nicht zweckmäßig, nicht erneut beschrieben.

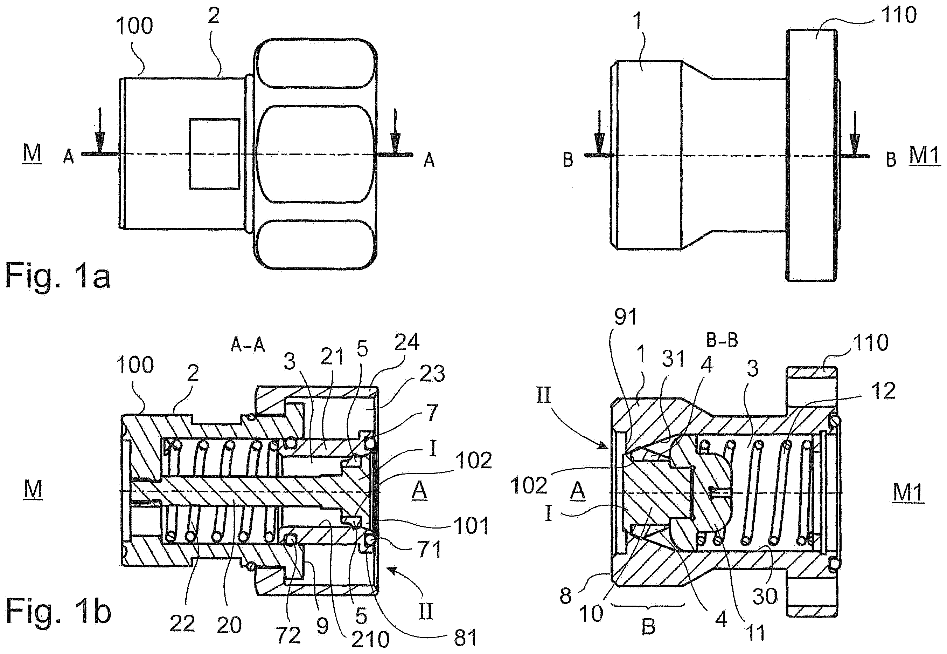

Fig. 1a zeigt zwei Medienleitungsendstücke 1,2 im entkoppelten Zustand. Das in der Fig. 1a rechte Medienleitungsendstück 1 ist im Ausführungsbeispiel dazu geeignet, in das in Fig. 1a links dargestellte Medienleitungsendstück 2 eingeführt zu werden, um im Kopplungsfall einen Mediendurchgang 3 durch die Medienleitungsendstücke 1,2 in die jeweils sich anschließenden Medienleitungen M,M1 zu ermöglichen. Das rechts dargestellte erste Medienleitungsendstück 1 kann beispielsweise fix an einem Ort angeordnet werden. Über das zweite Medienleitungsendstück 2, das mit dem ersten Medienleitungsendstück 1 gekoppelt wird, kann dann ein Medium über die Medienleitungen M,M1 fließen und beispielsweise einen Schaltraum oder dergleichen mit einem Gas befüllen. Entscheidend hierbei ist es, dass über die Medienleitungsendstücke und insbesondere während der Kopplung der beiden Medienleitungsendstücke 1,2 kein Austritt des Mediums erfolgt. Hierzu ist im Inneren der Medienleitungsendstücke 1,2 jeweils ein Dichtelement I vorgesehen. Die Dichtelemente I der beiden Medienleitungsendstücke 1,2 werden beim Koppeln miteinander in Wirkverbindung gebracht. Das in der Fig. 1b linke Medienleitungsendstück 2 weist im Inneren einen Stößel 20 auf, der feststehend im Medienleitungsendstück 2 festgelegt ist. Hierzu weist ein im Medienleitungsendstück 2 vorgesehener Medienanschluss 100 eine entsprechende Aufnahme auf, in der der Endbereich des Stößels 20 angeordnet beziehungsweise aufgenommen ist. Über den Medienanschluss 100, der in Verbindung mit der Medienleitung M,M1 steht, wird das Medium in das Medienleitungsendstück 2 eingeleitet, um von dort im gekoppelten Zustand und über das zweite Medienleitungsendstück 1, in Fig. 1b rechts dargestellt, in die Medienleitung M1 zu fließen und von dort an einen Verwendungsort weitergeleitet zu werden. Der feststehende Stößel 20 ist umgeben von einer Hülse 21, an der die Hülsenfeder 22 anliegt. Die Hülsenfeder 22 bewirkt eine Rückbewegung der Hülse 21 bei Entkopplung der Medienleitungsendstücke 1,2. Die Hülse 21 stellt eine dauerhafte Dichtung beziehungsweise einen dauerhaften Abschluss des Mediendurchganges 3 sicher, wenn die beiden Medienleitungsendstücke 1,2 entkoppelt sind. In der Hülse 21 befindet sich der Mediendurchgang 3, der durch die Hülse 21 begrenzt und im Entkoppelungsfall abgeschlossen wird. Der an dem Stößel 20 vorgesehene

Dichtkörper 5 liegt an der Innenfläche 210 der Hülse 21 an und bewirkt hier eine zusätzliche Abdichtung. Die Hülse 21 ist gegenüber der Innenfläche des Medienanschlusses 100 durch eine zusätzlichen Dichtung abgedichtet. Beim Verschieben der Hülse 21 in dem Medienleitungsendstück 2 wird die Dichtung 72 entlang der Innenfläche des Medienanschlusses 100 bewegt und bewirkt hier eine zusätzliche Abdichtung, so dass es auch in dem zwischen Hülse 21 und Medienanschluss 100 bestehenden minimalen Spalt zu keinem Austritt des Mediums kommen kann.

In Richtung des Endbereiches II weitet sich der Medienanschluss 100 beziehungsweise das Medienleitungsendstück 2 auf und stellt somit eine Aufnahmeöffnung 23 zur Verfügung, in die das gegenüberliegende Medienleitungsendstück 1 eingeführt wird. In der Aufweitung befindet sich im entkoppelten Zustand auch die Hülse 21, die durch die Hülsenfeder 22 in Richtung des Endbereiches II beziehungsweise einer dort vorgesehenen Dichtfläche 7 verschoben ist. Die Dichtfläche 7 wird zur Verfügung gestellt durch den Hülsenrand 81 sowie den Endbereich 101 des Stößels 20. Da die Hülse 21 gegenüber dem Stößel 20 verschoben werden kann, wird die Dichtfläche 7 dadurch verbessert, dass im Hülsenrand 81 eine Dichtung 71 eingesetzt ist, die beim Koppeln der beiden Medienleitungsendstücke 1,2 die Verbindung zwischen den Endbereichen II in einem ersten Dichtschritt abdichtet. Dem Stößel 20 zugeordnet ist ein Dichtkörper 5, der den Stößel 20 beziehungsweise dessen Endbereich ringartig umschließt. Der Stößel 20 weist zur Aufnahme des Dichtkörpers 5 einen Absatz 102 auf, auf den der Dichtkörper 5 formschlüssig aufgebracht ist. Ein derartiger Formschluss kann durch einfaches Aufstecken des Dichtkörpers 5 erfolgen. Alternativ besteht die Möglichkeit, dass der Dichtkörper 5 verklebt, verpresst, aufgespritzt oder aufvulkanisiert vorgesehen ist. Der Dichtkörper 5 kann bereits bei der Herstellung des Stößels 20 beziehungsweise bei Montage des Medienleitungsendstückes 2 angeordnet oder vorgesehen werden. Der Dichtkörper 5 liegt an der Innenfläche 210 der Hülse 21 an und dichtet diese wirksam ab. Der Dichtkörper 5 ist dabei in Grenzen elastisch, so dass durch die Bewegung der Hülse 21 eine Verformung des Dichtkörpers 5 möglich ist. Hierdurch wird auch während der Bewegung der Hülse 21 eine durchgehende Dichtung sichergestellt. Durch das Medium, das in der Hülse 21 unter Druck ansteht, wird der Dichtkörper 5 komprimiert und gegen die Innenfläche 210 gepresst. Hieraus ergibt sich dann eine wirksame Dichtung auch dann, wenn die beiden Medienleitungsendstücke 1,2 kontaktiert werden, was dann der Fall ist, wenn eine Kopplung erfolgen soll, jedoch noch nicht erfolgt ist. In der Aufweitung ist zusätzlich eine Anlagefläche 9 vorgesehen, die bei vollständiger Kopplung der beiden Medienleitungsendstücke 1,2 in Anlage mit der Anlagefläche 8 am zweiten Medienleitungsendstück 1 gebracht wird.

Im in Fig. 1b rechts dargestellten Medienleitungsendstück ist ebenfalls eine Dichtelementfeder vorgesehen. Diese wirkt auf ein Dichtelement I, das im Ausführungsbeispiel der Fig. 1b als Dichtkegel 10 ausgebildet ist. Der Dichtkegel 10 ist im Medienleitungsendstück 1 beweglich und kann bei Kopplung mit dem den feststehenden Stößel 20 aufweisenden Medienleitungsendstück 2 vermittelt durch den Stößel 20 im Medienleitungsendstück 2 verschoben werden, um einen Mediendurchgang 3 freizugeben. Der Dichtkegel 10 ist im Ausführungsbeispiel der Fig. 1b mit einem dem Dichtkegel 10 zugeordneten Kreuzstück 11 dargestellt. Dieses Kreuzstück 11 steht in die Dichtelementfeder 12 ein und verbessert die Führung des Dichtkegels 10 bei Kopplung der beiden Medienleitungsendstücke 1,2. Auch das im zweiten Medienleitungsendstück 1 vorgesehene Dichtelement I weist einen Dichtkörper 4 auf, der als ringartiges Element ausgebildet und auf den Dichtkegel 10 aufgebracht ist. Der Dichtkörper 4 kann beispielsweise als aus einem elastischen Material gebildete Hülse hergestellt werden, um auf den Dichtkegel 10 aufgesteckt zu werden. Alternativ besteht die Möglichkeit, dass der Dichtkörper 4 unmittelbar auf den Dichtkegel 10 aufgespritzt, aufgeklebt, aufgepresst oder in sonstiger geeigneter Art und Weise aufgebracht ist. Der Dichtkörper 4 ist im Querschnitt gesehen nach Art eines Keiles mit unterschiedlich langen Seiten ausgebildet.

Der Dichtkegel 10 weist zusätzlich einen Absatz 102 auf, an dem der Dichtkörper 4 anliegt. Die unterschiedlich langen Seiten des im Querschnitt keilartigen Dichtkörpers 4 liegen zum einen an der Innenwand 31 des Medienleitungsendstükkes 1 an, zum anderen stellt die lange Seite des im Querschnitt keilartigen Dichtkörpers 4 eine verbesserte Medienleitung sicher. Das Medienleitungsendstück 1 weist eine zunächst zylindrische Innenwand 30 auf. Im weiteren Verlauf geht diese zylindrische Innenwand 30 in eine sich konisch verjüngende Innenwand 31 über, die im Endbereich B endet.

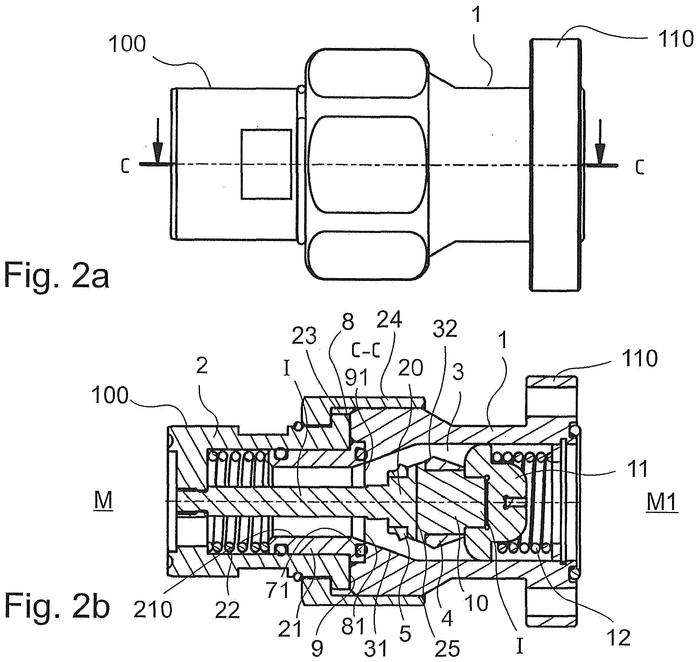

Fig. 2a zeigt die beiden Medienleitungsendstücke 1,2 der Fig. 1a in gekoppeltem Zustand. Dabei ist das in Fig. 1a rechte Medienleitungsendstück 1 in dem in Fig. 1a linken Medienleitungsendstück 2 aufgenommen. Über die Medienanschlüsse 100,110 sind die Medienleitungen M,M1 verbunden, so dass es hier zum ungehinderten Durchfluss des Mediums kommen kann. Fig. 2b stellt den gekoppelten Zustand der Medienleitungsendstücke 1,2 in Schnittdarstellung dar. Erkennbar ist hier die Hülse 21, die im Medienleitungsendstück 1,2 in axialer Richtung auf die Medienleitung M zu verschoben wurde und dabei die Hülsenfeder 22 komprimiert hat. Die Hülsenfeder 22 stellt jetzt eine Rückstellkraft zur Verfügung, die bei Entkopplung der Medienleitungsendstücke 1,2 ein Zurücksetzen der Hülse 21 in die Ausgangsposition bewirkt. In dieser liegt die Innenfläche 210 der Hülse 21 beziehungsweise deren Hülsenrand 81 am Stößel 20 an. Der Dichtkörper 5 dichtet den Stößel 20 und damit den gesamten Endbereich des Medienleitungsendstückes 2 ab, so dass es zu keinem Austritt von Medium aus dem Medienleitungsendstück 2 kommen kann. Der Stößel 20 beziehungsweise dessen Stößelende 101 liegt an dem Dichtkegel 10 an. Im Verlauf der Kopplung der beiden Medienleitungsendstücke 1,2 wird während des Einschiebens des Medienleitungsendstückes 1 in das zweite Medienleitungsendstück 2 eine Verschiebung des Dichtkegels 10 durchgeführt. Die Führung des Dichtkegels 10 wird erreicht durch das Kreuzstück 11, das teilweise in die Dichtelementfeder 12 einsteht. Im Zuge der Kopplung und der damit einhergehenden Verschiebung des Dichtkegels 10 kommt es auch zu eine Komprimierung der Dichtelementfeder 12, die dann eine geeignete Rückstellkraft zur Verfügung stellt, um beim Entkoppeln den Dichtkegel 10 in die Dichtposition zu verbringen, in der der auf dem Dichtkegel 10 aufgebrachte Dichtkörper 4 an der Innenwand 31, die sich auf den Endbereich des Dichtelementes I zu konisch verjüngt, anliegt. Hierbei entfaltet der Dichtkörper 4 eine Dichtwirkung, da die vordere Schrägseite 32 an der konisch verjüngten Innenwand 31 anliegt und hierbei den Mediendurchgang 3 abschließt.

Der feststehende Stößel 20 steht in das anzukoppelnde Medienleitungsendstück 1 ein und bewirkt im Zuge des Koppelns eine axiale Verschiebung des Dichtkegels 10 in Richtung der Medienleitung M1. Gleichzeitig wird durch den vorderen Rand beziehungsweise die Anlagefläche 8 eine Verschiebung der Hülse 21 in axialer Richtung auf die Medienleitung M zu bewirkt. Die an der Hülse 21 beziehungsweise dem Hülsenrand 81 vorgesehene Dichtung 71 bewirkt eine dauerhafte Abdichtung bereits bei erstem Kontakt von erstem und zweitem Medienleitungsendstück 1,2. Das im Ausführungsbeispiel rechte Medienleitungsendstück 1 verfügt zusätzlich über eine napfartige Vertiefung 91, die in Form und Größe dem durch Hülsenrand 81 und Stößelende 101 gebildeten Abschluss oder Endbereich des zweiten Medienleitungsendstückes 2 entspricht. Vor dem eigentlichen Kopplungsvorgang wird der Endbereich II (vgl. Fig. 1b) in diese napfartige Vertiefung 91 eingesetzt und ein Formschluss geschaffen, der das nachfolgende axiale Verschieben der Medienleitungsendstücke 1,2 aufeinander zu führt und somit wesentlich verbessert. Aufgrund der im Endbereich II des zweiten, in Fig. 2b linken Medienleitungsendstückes 2 vorgesehenen Dichtung 71 wird hier eine dichte Verbindung geschaffen, so dass bei nachfolgendem Verschieben der Hülse 21 und Einschieben des Medienleitungsendstückes 1 kein Medium am Endbereich II austreten kann. Der Mediendurchgang 3 ist zu keiner Zeit während des gesamten Kopplungsvorganges offen beziehungsweise nicht abgedichtet. Der Austritt von Medium wird somit wirksam verhindert. Während die aus elastischem Material gebildeten Dichtkörper 4,5 im entkoppelten Zustand eine Abdichtung des Endbereiches II der beiden Medienleitungsendstücke 1,2 bewirken, wird diese Abdichtung im gekoppelten Zustand durch die Dichtungen 71 in den stirnseitigen Endflächen beziehungsweise Anlageflächen 9,8 der Medienleitungsendstücke 1,2 sichergestellt. Um eine optimale Führung der Medienleitungsendstücke 1,2 im Kopplungsvorgang zu erreichen, weist das in Fig. 2b linke Medienleitungsendstück 2 eine Aufweitung 24 auf, die das im Ausführungsbeispiel der Fig. 2b rechte Medienleitungsendstück 1 zumindest in dessen Endbereich II umschließt und während der Kopplung führt. Die Anlagefläche 8 tritt zunächst in Verbindung mit der Hülse 21 und weist jedoch einen umlaufenden Rand auf, der mit der im zweiten Medienleitungsendstück 2 vorgesehenen Endfläche 9 in Anlage gebracht wird, wenn die Hülse 21 in ihrer Endposition, in der der Mediendurchgang 3 freigegeben ist, verschoben ist. Werden die Medienleitungsendstücke 1,2 entkoppelt, so bewirkt einerseits die Hülsenfeder 22, andererseits die Dichtelementfeder 12 eine Rückführung der Dichtelemente I in die Ausgangsposition. Während des gesamten Entkopplungsvorganges bleibt die Hülse 21 beziehungsweise deren Rand 81 in Wirkverbindung mit der Anlagefläche 8 des im Ausführungsbeispiel rechten Medienleitungsendstückes 1. Der Mediendurchgang 3 bleibt somit solange bestehen und abgedichtet, bis die Hülse 21 bis auf Höhe des Stößelendes beziehungsweise das Stößelende 101 rückgeführt ist und der Dichtkörper 5 an der Innenfläche 210 der Hülse 21 anliegt um den Mediendurchgang 3 abzudichten. Im gegenüberliegenden Medienleitungsendstück 1 wird im Zuge der Entkopplung und aufgrund der Rückstellkraft der Dichtelementfeder 12 der Dichtkegel 10 in Richtung des Endbereichs des Medienleitungsendstückes 1 verschoben. Bis der Dichtkörper 4 an der konisch zulaufenden Innenwand 31 anliegt, bleibt der Mediendurchgang 3 geöffnet. Erst nach Anliegen des Dichtkörpers 5 kommt es zum Abschluss des Mediendurchganges 3. Dieser Punkt wird gleichzeitig mit dem Abschluss der Verschiebung der Hülse 21 erreicht, so dass es hier vor der Trennung der Medienleitungsendstücke 1,2 zum Abdichten beziehungsweise Abschluss des Mediendurchganges 3 aufgrund der in ihre Endposition verbrachten Hülse 21 einerseits und des Dichtkegels 10 mit daran angeordnetem Dichtkörper 4 andererseits kommt. Die beiden Medienleitungsendstücke 1 können nunmehr getrennt werden, das heißt, der Endbereich II des im Ausführungsbeispiel linken Medienleitungsendstückes 2 wird aus der napfartigen Vertiefung 91 des im Ausführungsbeispiel der Fig. 1b und 2b rechten Medienleitungsendstückes 1 entnommen. Aufgrund der Dichtkörper 4,5 ist jedoch der Mediendurchgang 3 in diesem Moment bereits verschlossen, so dass kein weiteres Medium austreten und in die Atmosphäre gelangen kann. Das Kreuzstück 11 verbessert die Führung des Dichtkegels 10 und erlaubt bei geöffnetem Mediendurchgang 3 einen im Wesentlichen ungehinderten Durchgang des Mediums durch das Medienleitungsendstück 1. Insbesondere durch den elastischen Dichtkörper 4,5 wird die Dichtwirkung der Dichtelemente I wesentlich verbessert und somit eine Weiterbildung und Verbesserung herkömmlicher Medienleitungsendstücke 1,2 erzielt.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

## Patentansprüche

1. Kombination aus zwei miteinander zu verbindenden Medienleitungsendstücken (1, 2), die dichtend zusammenführbar sind und jeweils am Ende einer medien-, wie gas- oder flüssigkeitsführenden Medienleitung vorgesehen sind, wobei die Medienleitungsendstücke im entkoppelten Zustand einen im Innenraum der Medienleitungsendstücke vorgesehenen Mediendurchgang zur Atmosphäre hin abdichten und jeweils wenigstens ein Dichtelement (I) mit wenigstens einem Dichtkörper (4, 5) vorgesehen ist und der Dichtkörper (4, 5) an beziehungsweise auf dem Dichtelement (I), das im Zusammenwirken mit einem Dichtbereich im Mediendurchgang (3) diesen im entkoppelten Zustand verschließt, angeformt, aufgespritzt und/oder aufvulkanisiert ist und ein stirnseitiger Endbereich (II) des ersten Medienleitungsendstückes (2) eine Dichtfläche bildet und in beziehungsweise an der Dichtfläche wenigstens eine elastische Dichtung (71) angeordnet ist, **dadurch gekennzeichnet, dass** das Dichtelement (I) des ersten Medienleitungsendstückes (2) mit der Dichtfläche des ersten Medienleitungsendstückes (2) im wesentlichen bündig abschließt und im stirnseitigen Endbereich (II) des zweiten zu verbindenden Medienleitungsendstückes (1) ein dem Endbereich des ersten zu verbindenden Medienleitungsendstückes (2) in Form und Größe im wesentlichen entsprechender Aufnahmeraum oder Verbindungsraum für den Endbereich (II) des ersten Medienleitungsendstückes (2) vorgesehen ist, wobei der Aufnahmeraum oder Verbindungsraum im entkoppelten Zustand als Auffangvolumen für entweichende Medien zur Verfügung steht und der Aufnahmeraum oder Verbindungsraum als napfartige Vertiefung (91) ausgebildet ist, wobei eine Bodenfläche der napfartigen Vertiefung (91) durch das Dichtelement (I) gebildet ist und der stirnseitige Endbereich (II) des zweiten Medienleitungsendstückes (1) die Napftiefe definiert.

2. Kombination aus zwei miteinander zu verbindenden Medienleitungsendstücken (1, 2) nach Anspruch 1, **dadurch gekennzeichnet, dass** der Dichtkörper (4, 5) im Medienleitungsendstück (1) beweglich, insbesondere axial beweglich gelagert ist und eine Relativbewegung des Dichtkörpers (4, 5) im Medienleitungsendstück (1) eine Freigabe oder einen Verschluss des Mediendurchganges (3) bewirkt.

3. Kombination aus zwei miteinander zu verbindenden Medienleitungsendstücken (1, 2) nach einem der vorhergehenden Ansprüche, **dadurch gekennzeichnet, dass** als Dichtelement (I) im Medienleitungsendstück (1) ein, insbesondere im Medienleitungsendstück (1) beweglicher, Dichtkegel (10) vorgesehen ist.

4. Kombination aus zwei miteinander zu verbindenden Medienleitungsendstücken (1, 2) nach einem der vorhergehenden Ansprüche, **dadurch gekennzeichnet, dass** das Dichtelement (I) beziehungsweise der Dichtkegel (10) im Medienleitungsendstück (1) auf einem Kreuzstück (11) durch eine dem Dichtkegel (10) zugeordnete Dichtelementfeder (12) federgelagert ist, wobei die Kraftrichtung der Dichtelementfeder (12) in Richtung der Endseite des Medienleitungsendstückes (1) wirkt.

5. Kombination aus zwei miteinander zu verbindenden Medienleitungsendstücken (1, 2) nach einem der vorhergehenden Ansprüche, **dadurch gekennzeichnet, dass** der Mediendurchgang (3) von einer zylindrischen und im Endbereich (B) sich konisch verjüngenden Innenwand (30,31), zumindest teilweise seitlich, begrenzt ist.

6. Kombination aus zwei miteinander zu verbindenden Medienleitungsendstücken (1, 2) nach einem der vorhergehenden Ansprüche, **dadurch gekennzeichnet, dass** das Dichtelement (I) endseitig einen Flansch aufweist und der Dichtkörper (4, 5) in dem sich bildenden Absatz (102) des Flansches angeordnet ist.

7. Kombination aus zwei miteinander zu verbindenden Medienleitungsendstücken (1, 2) nach einem der vorhergehenden Ansprüche, **dadurch gekennzeichnet, dass** der Dichtkörper (4, 5) ringartig ausgebildet ist, wobei eine Ringinnenseite des Dichtkörpers (4, 5) flächig an dem Dichtelement (I) anliegt und/oder dadurch, dass der Dichtkörper (4, 5) auf der dem Stößel (20) beziehungsweise dem Dichtkegel (10) zugewandten Seite im Querschnitt gesehen L-förmig ausgebildet ist und/oder der Dichtkörper (4, 5) auf der der Innenwand (30, 31) des Mediendurchgangs (3) zugewandten Seite im Querschnitt gesehen keilförmig ausgebildet ist, wobei bevorzugt die Seiten des Keils ungleiche Längen aufweisen und/oder die höchste Erhebung des keilförmigen Dichtkörpers (4, 5) als Dichtlippe ausgebildet ist.

8. Kombination aus zwei miteinander zu verbindenden Medienleitungsendstücken (1, 2) nach einem der vorhergehenden Ansprüche, **dadurch gekennzeichnet, dass** der Dichtkörper (4, 5) aus Fluor-Kautschuk, EPDM-Kautschuk, PTFE (Teflon), NBR-Kunststoff oder Viton (Fluorelastomer) gebildet ist.

9. Kombination aus zwei miteinander zu verbindenden Medienleitungsendstücken (1, 2) nach einem der vorhergehenden Ansprüche, **dadurch gekennzeichnet, dass** die Dichtelemente (I) von zu verbindenden Medienleitungsendstücken (1,2) dichtend zusammenführbar sind.

10. Kombination aus zwei miteinander zu verbindenden Medienleitungsendstücken (1, 2) nach Anspruch 9, **dadurch gekennzeichnet, dass** die Dichtung als O-Ring ausgebildet und in einer umlaufenden Nut der Dichtfläche angeordnet ist.

11. Medienleitungsendstück, welches am Ende einer ersten medien-, wie gas- oder flüssigkeitführenden Medienleitung vorgesehen ist und zur Verbindung mit einem Medienleitungsendstück einer zweiten Medienleitung dient, wobei das Medienleitungsendstück im entkoppelten Zustand einen im Innenraum des Medienleitungsendstückes vorgesehenen Mediendurchgang zur Atmosphäre hin abdichtet und wenigstens ein Dichtelement (I) mit wenigstens einem Dichtkörper (5) vorgesehen ist und der Dichtkörper (5) an beziehungsweise auf dem Dichtelement (I), das im Zusammenwirken mit einem Dichtbereich im Mediendurchgang (3) diesen im entkoppelten Zustand verschließt, angeformt, aufgespritzt und/oder aufvulkanisiert ist wobei als Dichtelement (I) im Medienleitungsendstück (2) ein, insbesondere im Medienleitungsendstück (2) feststehender, Stößel (20) vorgesehen ist und/oder dass das Dichtelement (I) beziehungsweise Stößel (20) im Medienleitungsendstück (2) feststehend angeordnet ist, wobei eine Hülse (21) auf einer Hülsenfeder (22) federgelagert beweglich in dem Medienleitungsendstück (2) angeordnet ist und deren Relativbewegung im Zusammenwirken mit dem Stößel (20) den Mediendurchgang (3) im Medienleitungsendstück (2) abdichtet oder freigibt und/oder der Mediendurchgang (3) zumindest teilweise von der Innenfläche (210) der Hülse (21) seitlich begrenzt ist und ein stirnseitiger Endbereich (II) des Medienleitungsendstückes (1) eine Dichtfläche bildet und in beziehungsweise an der Dichtfläche wenigstens eine elastische Dichtung (71) angeordnet ist, **dadurch gekennzeichnet, dass** das Dichtelement (I) mit der Dichtfläche des Medienleitungsendstückes (1) im wesentlichen bündig abschließt und der Dichtkörper (5) durch das Medium, das in der Hülse (21) unter Druck ansteht komprimiert und gegen eine Innenfläche (210) der Hülse (21) gepresst wird.

12. Medienleitungsendstück nach Anspruch 11, **dadurch gekennzeichnet, dass** die Kraftrichtung der Hülsenfeder (22) zu dem der stirnseitigen Endbereich (II) gegenüberliegende Endseite des Medienleitungsendstückes (2) weist.

## Claims

1. A combination of two fluid line end pieces (1, 2) that have to be interconnected and be joined in a sealing manner and that are provided on each end of a medium line conveying medium such as gas or liquid, wherein the fluid line end pieces, when not coupled, seal a medium passage provided in the interior of the fluid line end pieces towards the atmosphere, and each time a seal element (I) with at least one sealing body (4, 5) is provided, and the sealing body (4, 5) is formed on, sprayed on, and/or vulcanized on onto or at the seal element (I), that seals, when not coupled, a medium passage (3) in interaction with a sealing area in the medium passage (3), and an end area (II) at the front side of the first fluid line end piece (2) forms a sealing surface, and in or at the sealing surface at least one elastic seal (71) is arranged, **characterized in that** the seal element (I) of the first fluid line end piece (2) is essentially flush with the seal surface of the first fluid line end piece (2), and in the front side end area (II) of the second fluid line end piece (1) that has to be interconnected a holding space or interconnecting space, that essentially corresponds with the shape and size of the end area of the second fluid line end piece (1) that has to be interconnected, is provided for the end area (II) of the first fluid line end piece (2), wherein the holding space or interconnecting space, when not coupled, is provided as collection volume for escaping medium, and the holding space or interconnecting space is configured as pan-shaped indentation (91), wherein a bottom of the pan-shaped indentation (91) is formed by the seal element (I), and the front side end area (II) of the second fluid line end piece (1) defines the depth of the pan.

2. The combination of two fluid line end pieces (1, 2) to be interconnected, according to claim 1, **characterized in that** the sealing body (4, 5) is mounted in the fluid line end piece (1) movably, in particular axially movably, and a relative movement of the sealing body (4, 5) in the fluid line end piece (1) causes releasing or sealing of the medium passage.

3. The combination of two fluid line end pieces (1, 2) to be interconnected, according to one of the preceding claims, **characterized in that** as seal element (I) in the fluid line end piece (1) a seal plug (10) that is in particular movable in the fluid line end piece (1) is provided.

4. The combination of two fluid line end pieces (1, 2) to be interconnected, according to one of the preceding claims, **characterized in that** the seal element (I) or the seal plug (10) is spring mounted in the fluid line end piece (1) on a crosspiece (11) by a sealing element spring (12) that is assigned to the seal plug (10), wherein the direction of power of the seal element spring (12) acts in the direction of the end side of the fluid line end piece (1).

5. The combination of two fluid line end pieces (1, 2) to be interconnected, according to one of the preceding claims, **characterized in that** the medium passage (3) is delimited at least partly on the side by a cylindrical interior wall (30, 31) that tapers conically in the end area (B).

6. The combination of two fluid line end pieces (1, 2) to be interconnected, according to one of the preceding claims, **characterized in that** the seal element (I) has a flange at its end, and the sealing body (4, 5) is arranged in the formed shoulder (102) of the flange.

7. The combination of two fluid line end pieces (1, 2) to be interconnected, according to one of the preceding claims, **characterized in that** the sealing body (4, 5) is configured like a ring, wherein an interior side of the ring of the sealing body (4, 5) is in planar contact with the seal element (I), and/or in that the sealing body (4, 5) is configured L-shaped seen in cross section on the side facing the tappet (20) or the seal plug (10), and/or the seal body (4, 5) is configured wedge-like seen in cross section on the side facing the interior wall (30, 31 of the medium passage (3), wherein preferably the sides of the wedge show different lengths, and/or the highest elevation of the wedge-like seal body (4, 5) is configured as seal lip.

8. The combination of two fluid line end pieces (1, 2) to be interconnected, according to one of the preceding claims, **characterized in that** the seal body (4, 5) is made of fluororubber, EPDM-rubber, PTFE (Teflon), NBR plastic rubber, or Viton (fluoropolymere elastomer).

9. The combination of two fluid line end pieces (1, 2) to be interconnected, according to one of the preceding claims, **characterized in that** the seal elements (I) of fluid line end pieces (1, 2) to be interconnected can be joined in a sealing way.

10. The combination of two fluid line end pieces (1, 2) to be interconnected, according to claim 9, **characterized in that** the seal is designed as O-ring and arranged in a circulating groove of the sealing surface.

11. A fluid line end piece provided at the end of a first medium line conveying media such as gas of liquid and serving for connecting with a fluid line end piece of a second medium line, wherein the fluid line end piece, when not coupled, seals a medium passage provided in the interior of the fluid line end piece toward the atmosphere, and at least one seal element (I) with at least one sealing body (5) is provided, and the sealing body (5) is formed on, sprayed on and or vulcanized on at or onto the seal element (I) that during interacting with a seal area in the medium passage (3) seals the medium passage, when not coupled, wherein as seal element (I) in the fluid line end piece (2) a tappet (20) is provided that is arranged fixedly in particular in the fluid line end piece (2), and/or the seal element (I) or the tappet (20) is arranged fixedly in the fluid line end piece (2), wherein a sleeve (21) is arranged spring mounted movably on a sleeve spring (22) in the fluid line end piece (2), and its relative movement in interaction with the tappet (20) seals or releases the medium passage (3) in the fluid line end piece (2), and/or the medium passage (3) is delimited at least partly on the side by the interior surface (210) of the sleeve (21), and an end area (II) on the front face of the fluid line end piece (1) forms a sealing surface, and in or at the sealing surface at least one elastic sealing (71) is arranged, **characterized in that** the seal element (I) is essentially flush with the sealing surface of the fluid line end piece (1), and the sealing body (5) is compressed by the medium applied under pressure in the sleeve (21) and is pressed against an interior surface (210) of the sleeve (21).

12. The fluid line end piece according to claim 11, **characterized in that** the direction of power of the sleeve spring (22) points to the end side of the fluid line end piece (2) opposite the end area (II) of the front face.

## Revendications

1. Combinaison de deux extrémités de canalisation de fluide (1, 2) à raccorder entre elles, qui peuvent être réunies de façon étanche et qui sont prévues à chaque fois à l'extrémité d'une canalisation acheminant un fluide, tel que du gaz ou du liquide, les extrémités de canalisation de fluide réalisant, à l'état désaccouplé, l'étanchéité vis-à-vis de l'atmosphère d'un passage de fluide prévu dans l'espace intérieur des extrémités de canalisation de fluide, et respectivement au moins un élément d'étanchéité (I) doté d'au moins un corps d'étanchéité (4, 5) étant prévu, et le corps d'étanchéité (4, 5) étant formé, pulvérisé et/ou vulcanisé contre ou sur l'élément d'étanchéité (I) qui, en coopération avec une zone d'étanchéité dans le passage de fluide (3), ferme celui-ci à l'état désaccouplé, et une zone d'extrémité frontale (II) de la première extrémité de canalisation de fluide (2) formant une surface d'étanchéité, et au moins un joint d'étanchéité élastique (71) étant agencé dans ou sur la surface d'étanchéité, **caractérisée en ce que** l'élément d'étanchéité (I) de la première extrémité de canalisation de fluide (2) se termine sensiblement en affleurement avec la surface d'étanchéité de la première extrémité de canalisation de fluide (2) et un espace de réception ou un espace de raccordement, correspondant sensiblement en forme et en taille à la zone d'extrémité de la première extrémité de canalisation de fluide (2) à raccorder, pour la zone d'extrémité (II) de la première extrémité de canalisation de fluide (2) est prévu dans la zone d'extrémité frontale (II) de la seconde extrémité de canalisation de fluide (1) à raccorder, l'espace de réception ou l'espace de raccordement, à l'état désaccouplé, servant de volume de collecte pour des fluides s'échappant, et l'espace de réception ou l'espace de raccordement étant réalisé sous forme d'évidement (91) en forme de cuvette, une surface de fond de l'évidement (91) en forme de cuvette étant formée par l'élément d'étanchéité (I) et la zone d'extrémité frontale (II) de la seconde extrémité de canalisation de fluide (1) définissant la profondeur de cuvette.

2. Combinaison de deux extrémités de canalisation de fluide (1, 2) à raccorder entre elles, selon la revendication 1, **caractérisée en ce que** le corps d'étanchéité (4, 5) est monté dans l'extrémité de canalisation de fluide (1) de manière mobile, en particulier de manière mobile axialement, et un mouvement relatif du corps d'étanchéité (4, 5) dans l'extrémité de canalisation de fluide (1) entraîne une libération ou une fermeture du passage de fluide (3).

3. Combinaison de deux extrémités de canalisation de fluide (1, 2) à raccorder entre elles selon l'une des revendications précédentes, **caractérisée en ce qu'**en tant qu'élément d'étanchéité (I) dans l'extrémité de canalisation de fluide (1), il est prévu un cône d'étanchéité (10), en particulier mobile dans l'extrémité de canalisation de fluide (1).

4. Combinaison de deux extrémités de canalisation de fluide (1, 2) à raccorder entre elles selon l'une des revendications précédentes, **caractérisée en ce que** l'élément d'étanchéité (I) ou le cône d'étanchéité (10) dans l'extrémité de canalisation de fluide (1) est suspendu sur ressort sur un croisillon (11) au moyen d'un ressort d'élément d'étanchéité (12) associé au cône d'étanchéité (10), le sens de la force du ressort d'élément d'étanchéité (12) agissant en direction du côté d'extrémité de l'extrémité de canalisation de fluide (1).

5. Combinaison de deux extrémités de canalisation de fluide (1, 2) à raccorder entre elles selon l'une des revendications précédentes, **caractérisée en ce que** le passage de fluide (3) est délimité au moins partiellement latéralement par une paroi interne (30, 31) cylindrique se rétrécissant de façon conique dans la zone d'extrémité (B),.

6. Combinaison de deux extrémités de canalisation de fluide (1, 2) à raccorder entre elles selon l'une des revendications précédentes, **caractérisée en ce que** l'élément d'étanchéité (I) comprend, du côté de son extrémité, une collerette et le corps d'étanchéité (4, 5) est agencé dans l'épaulement (102) se formant de la collerette.

7. Combinaison de deux extrémités de canalisation de fluide (1, 2) à raccorder entre elles selon l'une des revendications précédentes, **caractérisée en ce que** le corps d'étanchéité (4, 5) est réalisé en forme de bague, un côté intérieur de bague du corps d'étanchéité (4, 5) reposant à plat sur l'élément d'étanchéité (I), et/ou **en ce que** le corps d'étanchéité (4, 5) est réalisé en forme de L vu en section transversale sur le côté tourné vers le poussoir (20), respectivement le cône d'étanchéité (10), et/ou le corps d'étanchéité (4, 5) est réalisé en forme de coin vu en section transversale sur le côté tourné vers la paroi interne (30, 31) du passage de fluide (3), les côtés du coin présentant de préférence des longueurs différentes et/ou le rehaussement le plus élevé du corps d'étanchéité (4, 5) en forme de coin étant réalisé sous forme de lèvre d'étanchéité.

8. Combinaison de deux extrémités de canalisation de fluide (1, 2) à raccorder entre elles selon l'une des revendications précédentes, **caractérisée en ce que** le corps d'étanchéité (4, 5) est formé à partir de caoutchouc de fluor, de caoutchouc EPDM, de polytétrafluoroéthylène (Téflon), de plastique NBR ou de Viton (fluoroélastomère).

9. Combinaison de deux extrémités de canalisation de fluide (1, 2) à raccorder entre elles selon l'une des revendications précédentes, **caractérisée en ce que** les éléments d'étanchéité (I) d'extrémités de canalisation de fluide (1, 2) à raccorder peuvent être réunis de façon étanche.

10. Combinaison de deux extrémités de canalisation de fluide (1, 2) à raccorder entre elles selon la revendication 9, **caractérisée en ce que** le joint d'étanchéité est réalisé sous forme de joint torique et est agencé dans une rainure périphérique de la surface d'étanchéité.

11. Extrémité de canalisation de fluide, laquelle est prévue à l'extrémité d'une première canalisation acheminant un fluide, tel que du gaz ou du liquide, et sert au raccordement à une extrémité d'une deuxième canalisation de fluide, l'extrémité de canalisation de fluide réalisant, à l'état désaccouplé, l'étanchéité vis-à-vis de l'atmosphère d'un passage de fluide prévu dans l'espace intérieur de l'extrémité de canalisation de fluide, et au moins un élément d'étanchéité (I) doté d'au moins un corps d'étanchéité (4, 5) étant prévu, et le corps d'étanchéité (4, 5) étant formé, pulvérisé et/ou vulcanisé contre ou sur l'élément d'étanchéité (I) qui, en coopération avec une zone d'étanchéité dans le passage de fluide (3), ferme celui-ci à l'état désaccouplé, un poussoir (20) en particulier fixe dans l'extrémité de canalisation de fluide (2) étant prévu en tant qu'élément d'étanchéité (I) dans l'extrémité de canalisation de fluide (2), et/ou en ce que l'élément d'étanchéité (1), respectivement le poussoir (20), est agencé de manière fixe dans l'extrémité de canalisation de fluide (2), un manchon (21) étant agencé dans l'extrémité de canalisation de fluide (2) de manière mobile et suspendue sur un ressort de manchon (22) et son mouvement relatif, en coopération avec le poussoir (20), fermant de manière étanche ou libérant le passage de fluide (3) dans l'extrémité de canalisation de fluide (2) et/ou le passage de fluide (3) étant délimité latéralement au moins partiellement par la surface intérieure (210) du manchon (21) et une zone d'extrémité frontale (II) de l'extrémité de canalisation de fluide (1) formant une surface d'étanchéité et au moins un joint d'étanchéité (71) étant agencé dans ou sur la surface d'étanchéité, **caractérisée en ce que** l'élément d'étanchéité (I) se termine sensiblement en affleurement avec la surface d'étanchéité de l'extrémité de canalisation de fluide (1) et le corps d'étanchéité (5) est comprimé par le fluide qui est sous pression dans le manchon (21) et est pressé contre une surface intérieure (210) du manchon (21).

12. Extrémité de canalisation de fluide selon la revendication 11, **caractérisée en ce que** le sens de la force du ressort de manchon (22) est orienté vers le côté d'extrémité, opposé à la zone d'extrémité frontale (II), de l'extrémité de canalisation de fluide (2).
